# EUROPÄISCHE PATENTANMELDUNG

(11) **EP 4 280 003 A1**
(43) Veröffentlichungstag der Anmeldung: **22.11.2023**
(21) Anmeldenummer: 22173853.7
(22) Anmeldetag: 17.05.2022
(51) Int. Cl.: G05B 19/042

(54) **LEITSYSTEM FÜR EINE TECHNISCHE ANLAGE**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Vorgeschlagen wird ein Leitsystem (14) für eine technische Anlage, insbesondere Fertigungs- oder Prozessanlage, das dazu ausgebildet ist, einen ersten zeitlichen Verlauf (3) eines ersten Messwertes in einem ersten Verlaufsdiagramm (4) und einen zweiten zeitlichen Verlauf (5) eines zweiten Messwertes in einem zweiten Verlaufsdiagramm (6) visuell darzustellen.

Das Leitsystem (16) ist dadurch gekennzeichnet, dass es dazu ausgebildet ist, zur Laufzeit der technischen Anlage auf eine Anforderung eines Operators des Leitsystems hin den ersten zeitlichen Verlauf (3) des ersten Messwertes in dem zweiten Verlaufsdiagramm (6) zusätzlich zu dem zweiten zeitlichen Verlauf (5) des zweiten Messwertes visuell darzustellen.

## Beschreibung

Die Erfindung betrifft ein Leitsystem für eine technische Anlage, insbesondere Fertigungs- oder Prozessanlage. Außerdem betrifft die Erfindung eine Verwendung eines Leitsystems zum Betrieb einer technischen Anlage.

Für die Bedienung und Beobachtung verfahrenstechnischer Anlagen werden symbolische Anlagenbilder erstellt, die die verfahrenstechnischen Zusammenhänge - insbesondere zwischen einzelnen Prozessobjekten - abstrahiert darstellen. Anlagenbilder setzen sich dabei aus statischen Symbolen (z.B. Leitungen, Rechtecke, usw.), dynamisierten Symbolen (z.B. in Abhängigkeit von Prozesswerten Leitungen mit Farbumschlag, Rechtecke mit Füllständen, usw.), Blocksymbolen (zur dynamisierten Visualisierung verfahrenstechnischer Prozessobjekte), komplexe Controls (z.B. Trendanzeigen, Meldefolgeanzeigen, usw.) und Container, um Inhalte aus unabhängigen und eigenständige Quellen visualisieren zu können (z.B. Webcams, Anlagenbilder modulare Anlagenteile, oder Applikationen wie ein Regleroptimierer oder KPI-Berechnungen) zusammen.

Ein für die Bedienung und Beobachtung wesentliches komplexes Control ist die Trendanzeige, weil in dieser die Trendkurven der Prozesswerte von Prozessobjekte dargestellt werden, damit der Operator Verläufe und Tendenzen verfolgen und Vergleiche zwischen unterschiedlichen Trendkurven vornehmen kann. In der Regel werden Trendkurven in Anlagenbildern im Engineering projektiert, d.h. es wird jeweils festgelegt, für welche Prozesswerte in welchem Zeitbereich Trendkurven dargestellt werden sollen.

Um eine verfahrenstechnische Anlage effizient bedienen und beobachten zu können, müssen sich die Anzahl und Komplexität der Anlagenbilder, die den Operatoren zur Verfügung stehen, immer in einem "handhabbaren" Rahmen bewegen. Dies bedeutet, dass nicht alle möglichen Kombinationen von Trendkurven für die Bedienung und Beobachtung bereitgestellt werden können, insbesondere dann nicht, wenn diese nicht ständig verwendet werden.

Auch ist bei der Projektierung / dem Engineering der Bedienung und Beobachtung schwierig abzusehen, auf welche Kombinationen von unterschiedlichen Trendkurven Operatoren zur Laufzeit der verfahrenstechnischen Anlage angewiesen sein werden, um in den jeweiligen Situationen (Qualitätskontrolle, Hochlauf, Optimierung, usw.) geeignete Gegenüberstellungen von Trendkurven anbieten zu können.

Dennoch sind Operatoren oftmals darauf angewiesen, Trendkurven von unterschiedlichen Prozessobjekten (auch von unterschiedlichen Zeitbereichen) miteinander vergleichen bzw. gegenüberstellen zu können, ohne dass diese explizit in einem Anlagenbild konfiguriert sind. Nach dem Stand der Technik werden verschiedene Trendanzeigen mit unterschiedlichen Trendkurven (falls technisch möglich) auf Papier ausgedruckt, um eine Vergleichsdarstellung zu erhalten. Dieses Vorgehen ist nicht nur umständlich, sondern auch ungenau, aufwendig und fehleranfällig.

In der EP 3 876 046 A1 ist ein Leitsystem einer technischen Anlage offenbart, welches eine Anpassung einer durch einen Operator Station Client erfolgten Darbietung von Visualisierungsinformationen durch einen Operator zu einer Laufzeit der technischen Anlage ermöglicht.

Der Erfindung liegt die Aufgabe zugrunde, ein Leitsystem für eine technische Anlage anzugeben, welches die Effizienz und die Flexibilität einer Bedienung und Beobachtung der technischen Anlage erhöht.

Diese Aufgabe wird gelöst durch ein Leitsystem für eine technische Anlage mit den Merkmalen des Anspruchs 1. Außerdem wird die Aufgabe gelöst durch eine Verwendung eines Leitsystems zum Betrieb einer technischen Anlage gemäß Anspruch 13. Vorteilhafte Weiterbildungen ergeben sich aus den abhängigen Ansprüchen.

Das erfindungsgemäße Leitsystem für eine technische Anlage, insbesondere Fertigungs- oder Prozessanlage, ist dazu ausgebildet, einen zeitlichen Verlauf eines ersten Messwertes in einem ersten Verlaufsdiagramm und einen zeitlichen Verlauf eines zweiten Messwertes in einem zweiten Verlaufsdiagramm visuell darzustellen. Das Leitsystem ist dadurch gekennzeichnet, dass es dazu ausgebildet ist, zur Laufzeit der technischen Anlage auf eine Anforderung eines Operators des Leitsystems hin den zeitlichen Verlauf des ersten Messwertes in dem zweiten Verlaufsdiagramm zusätzlich zu dem zeitlichen Verlauf des zweiten Messwertes visuell darzustellen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

In an sich bekannter Weise ist das Leitsystem dazu ausgebildet, einen zeitlichen Verlauf von Messwerten (auch als sogenannte "Trendkurven" bezeichnet) in einem jeweiligen Verlaufsdiagramm visuell darzustellen. Die visuelle Darstellung kann beispielsweise auf einem Computerbildschirm, einem Tablet oder einem Smartphone erfolgen. Mit einem zeitlichen Verlauf eines Messwertes in einem Verlaufsdiagramm ist dabei eine visuelle Darstellung eines Verlaufs der Messwerte mit einer Zeitbasis gemeint. Das Verlaufsdiagramm zeigt dabei beispielsweise an, dass der erste Messwert zu einem Zeitpunkt t=5s von einem Startzeitpunkt aus einen Wert von 10 bar aufweist (für den Fall einer Druckgröße als Messwert).

Das Leitsystem ist dazu ausgebildet, eine Zusammenschau des ersten Verlaufs und des zweiten Verlaufs in einem gemeinsamen Verlaufsdiagramm (dem zweiten Verlaufsdiagramm) zu ermöglichen. Wesentlich dabei ist, dass diese Zusammenschau zur Laufzeit der technischen Anlage auf eine Anforderung eines Operators des Leitsystems erzeugt wird. Wie einleitend ausgeführt, ist es bekannt, dass eine solche Zusammenschau zweier zeitlicher Verläufe im Vorhinein, d.h. während einer Engineering- bzw. Projektierungsphase der technischen Anlage "fest verdrahtet" wird. Mit anderen Worten ist es bekannt, dass ein Projekteur eine solche Zusammenschau fest vorgibt, bevor die technische Anlage den Betrieb aufnimmt (d.h. vor der Laufzeit) .

Das erfindungsgemäße Leitsystem ermöglicht es dem Operator nun jedoch in besonders vorteilhafter Weise, zur Laufzeit der technischen Anlage Gegenüberstellungen von zeitlichen Verläufen flexibel durchzuführen, ohne dass hierbei die zeitlichen Verläufe in einem gemeinsamen Verlaufsdiagramm hätten projektiert werden müssen.

Bevorzugt ist das Leitsystem dazu ausgebildet, Anlagenbilder visuell darzustellen, wobei die Anlagenbilder jeweils die technische Anlage oder einen Teil der technischen Anlage für ein Bedienen und Beobachten der technischen Anlage repräsentieren, und wobei das Leitsystem dazu ausgebildet ist, das erste Verlaufsdiagramm in einem ersten Anlagenbild darzustellen und das zweite Verlaufsdiagramm in einem zweiten, von dem ersten Anlagenbild verschiedenen Anlagenbild darzustellen.

Im Falle einer Prozessanlage kann solch ein Anlagenbild beispielsweise grafische Repräsentationen von Pumpen, Ventilen, Tanks, Rohrleitungen, Brennkammern oder dergleichen umfassen. Die grafischen Repräsentationen können dabei aktuelle Prozessmesswerte, Statuswerte, (Alarm-)Meldungen oder dergleichen umfassen.

Die Erfindung ist nicht auf die Gegenüberstellung von zwei zeitlichen Verläufen beschränkt, die Teil eines einzigen Anlagenbildes sind. Vielmehr kann jeder zeitliche Verlauf einem anderen Anlagenbild angehören.

Der zeitliche Verlauf des ersten Messwertes kann mit einer ersten Werteachse und der zeitliche Verlauf des zweiten Messwertes mit einer zweiten Werteachse in dem zweiten Verlaufsdiagramm dargestellt werden. Es ist aber auch möglich, dass beide zeitlichen Verläufe mit einer gemeinsamen Werteachse dargestellt werden. Dies hängt davon ab, welcher Art die zugrundeliegenden Messwerte sind.

Bevorzugt ist das Leitsystem dazu ausgebildet, einen zeitlichen Verlauf eines dritten Messwertes in einem dritten Verlaufsdiagramm darzustellen, wobei das Leitsystem dazu ausgebildet ist, zur Laufzeit der technischen Anlage auf die Anforderung eines Operators des Leitsystems hin den zeitlichen Verlauf des ersten Messwertes und den zeitlichen Verlauf des dritten Messwertes in dem zweiten Verlaufsdiagramm zusätzlich zu dem zeitlichen Verlauf des zweiten Messwertes visuell darzustellen. Darüber hinaus sind beliebige Kombinationen von Gegenüberstellungen einer Mehrzahl von zeitlichen Verläufen in dem zweiten Verlaufsdiagramm und ggf. zusätzlich in weiteren Verlaufsdiagrammen möglich.

Die Anforderung des Operators kann eine graphische Verschiebeoperation oder eine Kopieren-und-Einfügen Anweisung darstellen. Bei einer solchen Verschiebeoperation zieht der Operator das erste Verlaufsdiagramm auf einen Bereich des zweiten Verlaufsdiagramm ("Drag&Drop"), wobei er hierzu beispielsweise eine Computermaus oder einen/mehrere Finger einer seiner Hände verwendet. Bei einer Kopieren-und-Einfügen Anweisung "klickt" oder "tippt" der Operator auf das erste Verlaufsdiagramm, wählt eine von dem Leitsystem bereitgestellte Kopierfunktionalität aus und "klickt" oder "tippt" auf das zweite Verlaufsdiagramm und wählt dort eine von dem Leitsystem bereitgestellte Einfügungsfunktionalität aus ("Copy& Paste").

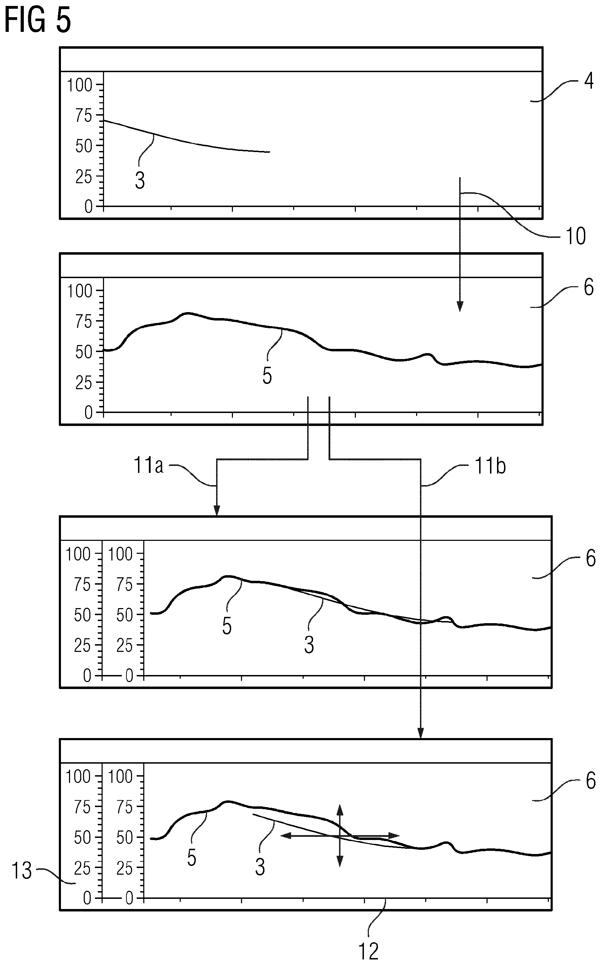

Im Rahmen einer vorteilhaften Weiterbildung der Erfindung ist das Leitsystem dazu ausgebildet, die in dem zweiten Verlaufsdiagramm gemeinsam visualisierten zeitlichen Verläufe der Messwerte statisch darzustellen. Die aktuell in den beiden Verlaufsdiagrammen dargestellten visuellen Verläufe werden dabei "eingefroren". Dadurch kann der Operator die beiden zeitlichen Verläufe besonders einfach und gezielt miteinander vergleichen. Dabei kann das Leitsystem dazu ausgebildet sein, eine Anpassung einer ersten Zeitachse des zeitlichen Verlaufs des ersten Messwertes und einer zweiten Zeitachse des zeitlichen Verlaufs des zweiten Messwertes automatisch vorzunehmen. Dies kann vor allem dann von Interesse sein, wenn die beiden zeitlichen Verläufe vor der Gegenüberstellung über unterschiedliche Zeitbereiche hinweg dargestellt waren. Das Leitsystem kann auch dazu ausgebildet sein, dem Operator eine Änderungsfunktionalität bezüglich der Anpassung der ersten Zeitachse des zeitlichen Verlaufs des ersten Messwertes und der zweiten Zeitachse des zeitlichen Verlaufs des zweiten Messwertes bereitzustellen. Hierzu sei insbesondere auf die Beschreibung des Ausführungsbeispiels der Erfindung gemäß FIG 5 verwiesen.

Das Leitsystem kann dazu ausgebildet sein, dem Operator eine Auswahlfunktionalität bezüglich der in dem zweiten Verlaufsdiagramm gemeinsam visualisierten zeitlichen Verläufe der Messwerte bereitzustellen, derart, dass der Operator zwischen einer statischen und einer dynamischen visuellen Darstellung der zeitlichen Verläufe der Messwerte wechseln kann. Eine dynamische visuelle Darstellung bedeutet dabei, dass die zeitlichen Verläufe der Messwerte auf einem aktuellen Stand gehalten werden, wodurch der Operator eine aktuelle Entwicklung der gegenübergestellten Messwerte effizient überblicken und verfolgen kann. Es ist natürlich auch möglich, dass nur eine dynamische visuelle Darstellung der zeitlichen Verläufe dargestellt wird, ohne dass eine Auswahlfunktionalität vorgehalten werden würde.

Das Leitsystem ist bevorzugt dazu ausgebildet, die in dem zweiten Verlaufsdiagramm gemeinsam visuell dargestellten zeitlichen Verläufe in einer gemeinsamen Datei in einem Speicher abzulegen. Die hinterlegten Verläufe können damit zu einem späteren Zeitpunkt für nachfolgende Auswertungen verwendet werden. Der Speicher kann Teil des Leitsystems sein und in der technischen Anlage selbst realisiert sein. Es ist aber auch möglich, dass ein cloudbasierter Speicher verwendet wird.

Das Leitsystem kann auch dazu ausgebildet sein, die von dem Operator gestellte Anforderung als Nutzerselektion in einem Speicher zu hinterlegen. Mit anderen Worten kann das Leitsystem die von dem Operator gewünschte Gegenüberstellung der zeitlichen Verläufe als ein Favorit speichern, den der Operator zu einem späteren Zeitpunkt einfach wieder aufrufen kann, um sich die Gegenüberstellung erneut anzeigen zu lassen. Dies ist insbesondere relevant, da ein Operator nicht ununterbrochen an dem Leitsystem arbeitet bzw. an diesem angemeldet ist. Nach Beendigung seiner Arbeit an dem Leitsystem und der Wiederaufnahme der Arbeit (zu einem späteren Zeitpunkt) hilft dem Operator die Nutzerselektion, seine Favoriten schnell und effizient wieder nutzen zu können.

Bevorzugt weist das Leitsystem einen Operator Station Server auf, der dazu ausgebildet ist, die zeitlichen Verläufe der Messwerte anhand von aus der technischen Anlage empfangenen Messdaten zu erzeugen und an einen mit dem Operator Station Server verbundenen Operator Station Client zu übertragen, welcher die visuelle Darstellung der zeitlichen Verläufe in den Verlaufsdiagrammen vornimmt. Das Leitsystem kann mit einem oder mehreren Automatisierungsgeräten verbunden sein, die dem Operator Station Server die zeitlichen Verläufe der aus der technischen Anlage stammenden Messwerte übermitteln.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage zur Visualisierung an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Ein Operator der technischen Anlage kann über den Operator Station Client, welcher beispielsweise ein Tablet, ein Smartphone, ein Personal Computer oder dergleichen sein kann, zum Zwecke eines Bedienens und Beobachtens der technischen Anlage auf den Operator Station Server zugreifen.

Die zuvor formulierte Aufgabe wird zudem gelöst durch die Verwendung eines Leitsystems wie zuvor erläutert zum Betrieb einer technischen Anlage, insbesondere Fertigungs- oder Prozessanlage.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: ein erstes Anlagenbild zur Bedienung und Beobachtung einer Prozessanlage;
- FIG 2: ein zweites Anlagenbild zur Bedienung und Beobachtung einer Prozessanlage gemäß einem ersten Aspekt;
- FIG 3: das Anlagenbild aus FIG 2 gemäß einem zweiten Aspekt;
- FIG 4: eine erste beispielhafte Kombination verschiedener zeitlicher Verläufe von Prozessmesswerten;
- FIG 5: eine zweite beispielhafte Kombination verschiedener zeitlicher Verläufe von Prozessmesswerten; und
- FIG 6: ein erfindungsgemäßes Leitsystem in einer schematischen Darstellung.

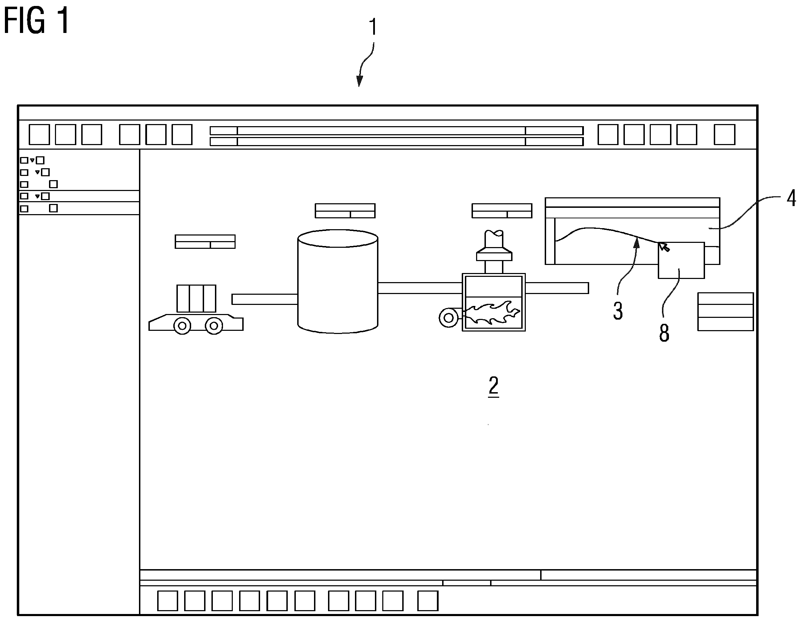

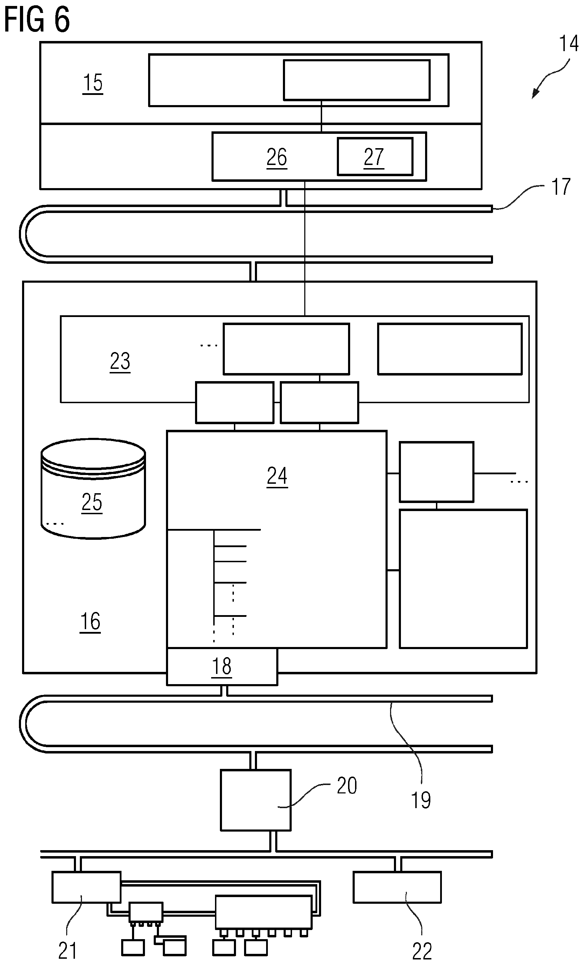

In FIG 1 ist eine grafische Nutzeroberfläche 1 eines Leitsystems für eine Bedienung und Beobachtung einer Prozessanlage dargestellt. Die grafische Nutzeroberfläche 1 wird von einem Operator Station Client des Leitsystems bereitgestellt (vgl. FIG 6). In der grafischen Nutzeroberfläche 1 wird ein erstes Anlagenbild 2 visuell dargeboten.

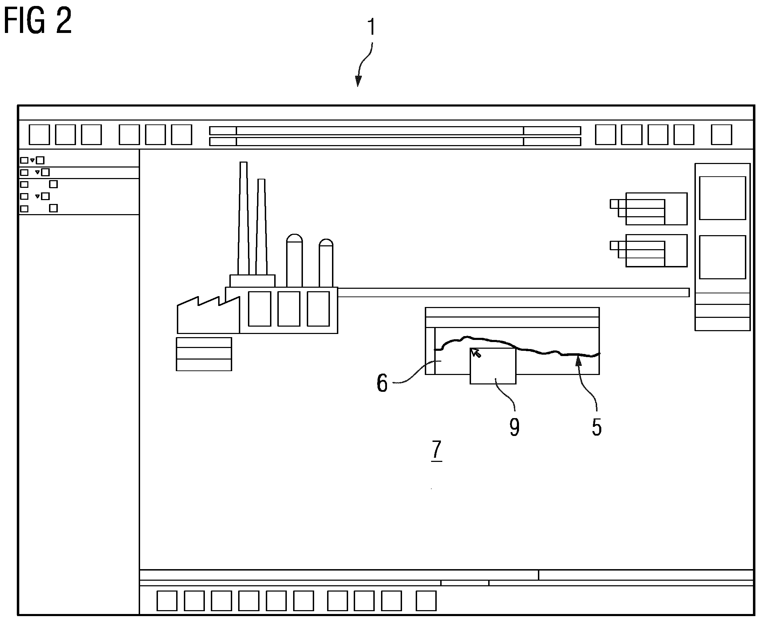

In diesem Ausführungsbeispiel wird ein Prozessmesswert (z.B. eine Durchflussmenge) durch zwei unterschiedliche Prozessobjekte (durch einen Regler und einen Monitor) erfasst. Ein von dem Regler erfasster erster zeitlicher Verlauf 3 des Prozessmesswertes wird in dem ersten Anlagenbild 2 in einem ersten Verlaufsdiagramm 4 dargestellt. Ein von dem Monitor erfasster zweiter zeitlicher Verlauf 5 des Prozessmesswertes wird in einem zweiten Verlaufsdiagramm 6 dargestellt, welches Teil eines zweiten, von dem ersten verschiedenen Anlagenbildes 7 ist. Das zweite Anlagenbild 7 wird in FIG 2 dargestellt, wo es Teil der grafischen Nutzeroberfläche 1 ist. Beide Anlagenbilder 2, 7 zeigen jeweils einen anderen Teil der Prozessanlage. Ein Operator, welcher das Leitsystem bedient und beobachtet, kann zwischen den beiden Anlagenbildern 2, 7 wechseln.

Beispielsweise für eine Inbetriebnahme, eine fortlaufende Kontrolle oder ähnlichem kann der Operator beide zeitlichen Verläufe 3, 5 miteinander vergleichen wollen. Die beiden Verlaufsdiagramme 4, 6 wurden jedoch nicht im Vornherein in einem gemeinsamen Verlaufsdiagramm 4, 6 projektiert.

Möchte der Operator nun dennoch ersten zeitlichen Verlauf 3 aus dem ersten Anlagenbild 2 dem zweiten zeitlichen Verlauf 5 aus dem zweiten Anlagenbild 7 gegenüberstellen, so ist er durch das erfindungsgemäße Leitsystem in der Lage, den ersten zeitlichen Verlauf 3 in dem ersten Verlaufsdiagramm 4 über eine Kopierfunktionalität 8 zu selektieren (wie in FIG 1 dargestellt). In dem zweiten Anlagenbild 7 kann der Operator darauf eine Einfügungsfunktionalität 9 nutzen, um das zuvor kopierte erste Verlaufsdiagramm 4 in das zweite Verlaufsdiagramm 6 einzubetten (wie in FIG 2 dargestellt).

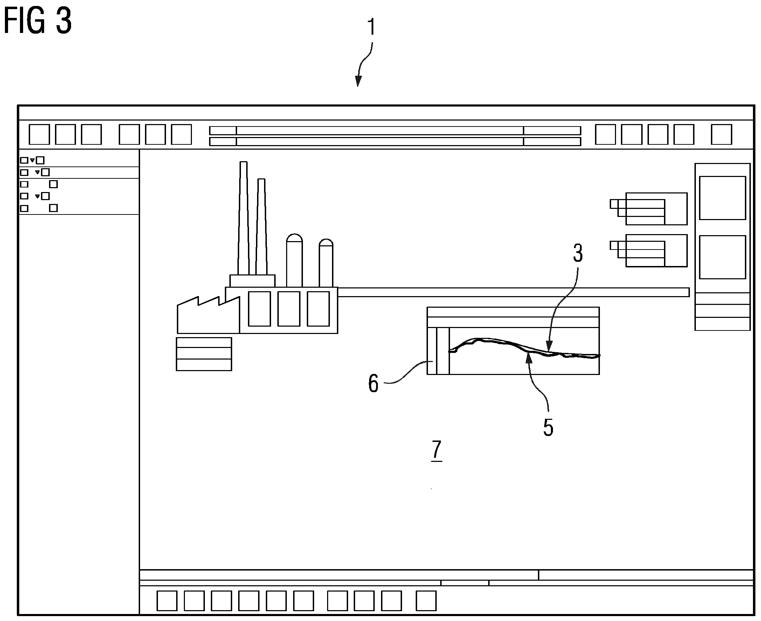

In FIG 3 ist die grafische Nutzeroberfläche 1 mit dem zweiten Anlagenbild 7 dargestellt. In dem zweiten Verlaufsdiagramm 6 wird nicht nur der zweite zeitliche Verlauf 5, sondern auch der erste zeitliche Verlauf 3 dargestellt. Die gegenübergestellten zeitlichen Verläufe 3, 5 sind dabei so lange eingefroren, bis der Operator den Modus des "Einfrierens" beendet und zur dynamischen Darstellung der zeitlichen Verläufe wechselt (d.h. es werden die zu einem aktuellen Zeitpunkt empfangenen zeitlichen Verläufe 3, 5 dargestellt).

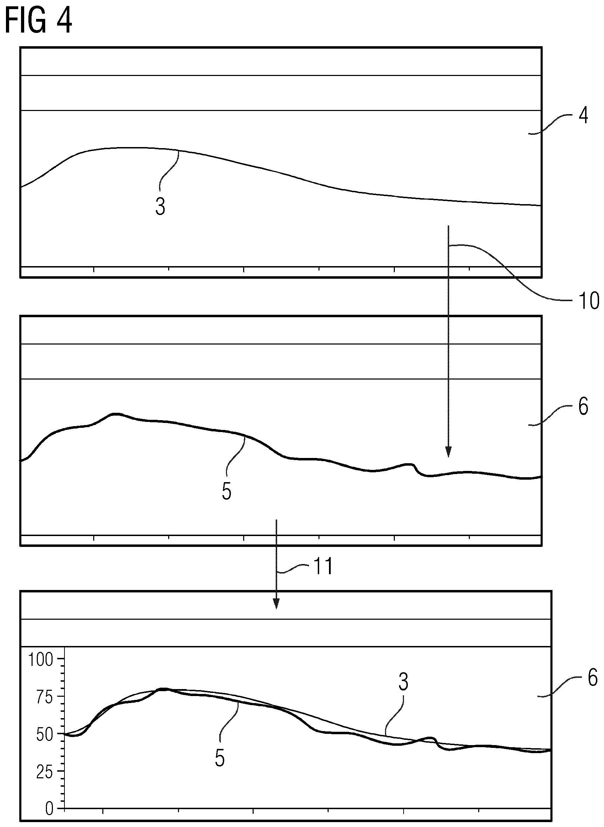

FIG 4 zeigt den Kopieren-und-Einfügen Vorgang, der zuvor erläutert wurde, im Detail. Der erste zeitliche Verlauf 3 in dem ersten Verlaufsdiagramm 4 wird kopiert und eine Kopieraktion 10 mit dem Ziel des zweiten Verlaufsdiagramms 6 initiiert. Als Resultat einer darauffolgenden Vereinigungsaktion 11 werden beide zeitliche Verläufe 3, 5 in dem zweiten Verlaufsdiagramm 6 dargestellt.

Beim Einfügen des ersten zeitlichen Verlaufs 3 in das zweite Verlaufsdiagramm 6 werden automatisch die Zeitbereiche der beiden Trendkurven übereinandergelegt und abgeglichen. In FIG 4 stellt dies kein größeres Problem dar, da die Zeitbereiche des ersten zeitlichen Verlaufs 3 und des zweiten zeitlichen Verlaufs 5 übereinstimmen (also gleich breit sind). Bei dem in FIG 5 dargestellten Beispiel ist der Zeitbereich des zweiten zeitlichen Verlaufs 5 größer, weshalb durch das Gegenüberstellen nicht zu allen Zeitpunkten ein direkter Vergleich vorliegt. Das Leitsystem kann in einer ersten Vereinigungsaktion 11a einen automatischen Abgleich der Zeitbereiche vornehmen. Der Operator hat aber auch die Möglichkeit den automatischen Abgleich durch eine manuelle Ausrichtung des ersten zeitlichen Verlaufs 3 in dem zweiten Verlaufsdiagramm 6 zu ersetzen. Er kann mit anderen Worten den ersten zeitlichen Verlauf selbst entlang einer Zeitachse 12 und einer Werteachse 13 ausrichten (vgl. unteres Bild in FIG 5). Dies kann insbesondere bei einer Untersuchung eines Hochfahrverhaltens der Prozessanlage von Interesse sein.

Die Werteachse 13 ist in den gezeigten Ausführungsbeispielen für den ersten zeitlichen Verlauf 3 und den zweiten zeitlichen Verlauf 5 identisch, was aber nicht zwingend notwendig ist. Das zweite Verlaufsdiagramm 6 kann bei der Gegenüberstellung der zeitlichen Verläufe 2, 5 auch verschiedene Werteachsen 13 aufweisen. Die Zeitachse 12 ist vorliegend ebenfalls identisch. Bei einer Gegenüberstellung mit "eingefrorenen" zeitlichen Verläufen 3, 5 können aber auch sich unterscheidende Zeitachsen verwendet werden. Bei der Live-Ansicht, d.h. bei aktuellen (nicht statischen) zeitlichen Verläufen 3, 5c, kann jedoch nur eine gemeinsame Zeitachse 12 werden.

In FIG 6 ist ein Leitsystem 14 für die Bedienung und Beobachtung der als Prozessanlage ausgebildeten technischen Anlage schematisch dargestellt. Das Leitsystem 14 umfasst einen Operator Station Client 15 und einen Operator Station Server 16. Der Operator Station Server 16 und der Operator Station Client 15 sind über einen Terminalbus 17 miteinander und optional mit nicht dargestellten weiteren Komponenten des Leitsystems 14 wie einem Archivserver oder einem Engineering Station Server verbunden.

Ein Benutzer bzw. Operator kann zum Zwecke des Bedienens und Beobachtens über den Operator Station Client 15 mittels des Terminalbus 17 auf den Operator Station Server 16 zugreifen. Der Terminalbus 17 kann, ohne sich darauf zu beschränken, beispielsweise als Industrial Ethernet ausgebildet sein.

Der Operator Station Server 16 weist eine Geräteschnittstelle 18 auf, die mit einem Anlagenbus 19 verbunden ist. Über diese Geräteschnittstelle 18 ist der Operator Station Server 16 mit einem Automatisierungsgerät 20 sowie mit weiteren Komponenten der verfahrenstechnischen Anlage wie Peripheriegeräten 21, 22 verbunden und kann mit diesen kommunizieren. Der Anlagenbus 19 kann, ohne sich darauf zu beschränken, beispielsweise als Industrial Ethernet ausgebildet sein.

Auf dem Operator Station Server 16 sind (unter anderem) ein Visualisierungsdienst 23, ein Prozessabbild 24 und ein Konfigurationsspeicher 25 implementiert. Der in dem Operator Station Server 16 integrierte Visualisierungsdienst 23 initiiert eine Übertragung von Visualisierungsinformationen an den Operator Station Client 15. Der Operator Station Client 15 ist dazu ausgebildet, eine Visualisierung, d.h. eine grafische Darbietung, insbesondere von Anlagenbildern, zum Bedienen und Beobachten der Prozessanlage darzustellen.

In dem Prozessabbild 24 des Operator Station Servers 16 ist eine Momentaufnahme der (Signal-)Zustände von mit dem Operator Station Server 16 verbundenen Geräten und/oder Applikationen hinterlegt.

Ein Verfahren zum Betreiben des Leitsystems 14 kann wie folgt ablaufen: Zunächst werden Informationen von dem Engineering Station Server (nicht dargestellt) mittels eines Übersetzungsdienstes kompiliert und in den Konfigurationsspeicher 25 auf dem Operator Station Server 16 übertragen. In den Informationen sind Visualisierungsinformationen enthalten, die eine Visualisierung wenigstens eines ersten Verlaufsdiagramms und eines zweiten Verlaufsdiagramms (vgl. FIG 1-5) betreffen.

Der Visualisierungsdienst überträgt die aus dem Konfigurationsspeicher 25 ausgelesenen Visualisierungsinformationen, die u.a. die Visualisierung wenigstens des ersten Verlaufsdiagramms und des zweiten Verlaufsdiagramms betreffen, an einen Verlaufsdiagrammdienst 26, der auf dem Operator Station Client 15 computerimplementiert ist. Dieser wandelt die Visualisierungsinformationen in eine visuelle Darstellung Verlaufsdiagramme (und der dazugehörigen Anlagenbilder bzw. grafischen Nutzerschnittstellen) um, die zu einem aktuellen Zeitpunkt dargestellt werden sollen.

Wird das erste Verlaufsdiagramm von einem Operator des Leitsystems 14 für eine Gegenüberstellung ausgewählt (kopiert), so wird dieses in einem Speicher 27 des Operator Station Clients 15 zwischengespeichert, so dass es in dem dafür vom Operator vorgesehenen zweiten Verlaufsdiagramm eingefügt werden können. Das erste Verlaufsdiagramm verbleibt so lange in dem Speicher 27, bis die Gegenüberstellung der zeitlichen Verläufe in dem zweiten Verlaufsdiagramm aufgehoben wird.

Weiterhin werden für jedes kopierte Verlaufsdiagramm in dem Speicher 27 auch die Referenzen zu dem zweiten Verlaufsdiagramm (und ggf. weiteren Verlaufsdiagrammen) hinterlegt, in denen das erste Verlaufsdiagramm für eine Gegenüberstellung eingefügt worden ist. Dadurch kann die Gegenüberstellung auch bei Bildwechseln usw. erhalten bleiben, beispielsweise bis zu dem Zeitpunkt, in denen der Operator die Gegenüberstellung aufhebt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (14) für eine technische Anlage, insbesondere Fertigungs- oder Prozessanlage, das dazu ausgebildet ist, einen ersten zeitlichen Verlauf (3) eines ersten Messwertes in einem ersten Verlaufsdiagramm (4) und einen zweiten zeitlichen Verlauf (5) eines zweiten Messwertes in einem zweiten Verlaufsdiagramm (6) visuell darzustellen,
**dadurch gekennzeichnet, dass**
das Leitsystem (14) dazu ausgebildet ist, zur Laufzeit der technischen Anlage auf eine Anforderung eines Operators des Leitsystems hin den ersten zeitlichen Verlauf (3) des ersten Messwertes in dem zweiten Verlaufsdiagramm (6) zusätzlich zu dem zweiten zeitlichen Verlauf (5) des zweiten Messwertes visuell darzustellen.

2. Leitsystem (14) nach Anspruch 1, das dazu ausgebildet ist, Anlagenbilder (2, 7) visuell darzustellen, wobei die Anlagenbilder (2, 7) jeweils die technische Anlage oder einen Teil der technischen Anlage für ein Bedienen und Beobachten der technischen Anlage repräsentieren, und wobei das Leitsystem (14) dazu ausgebildet ist, das erste Verlaufsdiagramm (4) in einem ersten Anlagenbild (2) darzustellen und das zweite Verlaufsdiagramm (6) in einem zweiten, von dem ersten Anlagenbild (2) verschiedenen Anlagenbild (7) darzustellen.

3. Leitsystem (14) nach Anspruch 1 oder 2, das dazu ausgebildet ist, den ersten zeitlichen Verlauf (3) des ersten Messwertes mit einer ersten Werteachse und den zweiten zeitlichen Verlauf (5) des zweiten Messwertes mit einer zweiten Werteachse in dem zweiten Verlaufsdiagramm (6) darzustellen.

4. Leitsystem (14) nach einem der Ansprüche 1 bis 3, das dazu ausgebildet ist, einen dritten zeitlichen Verlauf eines dritten Messwertes in einem dritten Verlaufsdiagramm darzustellen, wobei das Leitsystem (14) dazu ausgebildet ist, zur Laufzeit der technischen Anlage auf die Anforderung eines Operators des Leitsystems (14) hin den ersten zeitlichen Verlauf (3) des ersten Messwertes und den dritten zeitlichen Verlauf des dritten Messwertes in dem zweiten Verlaufsdiagramm (6) zusätzlich zu dem zweiten zeitlichen Verlauf (5) des zweiten Messwertes visuell darzustellen.

5. Leitsystem (14) nach einem der vorangegangenen Ansprüche, bei dem die Anforderung des Operators eine graphische Verschiebeoperation oder eine Kopieren-und-Einfügen Anweisung (8, 9) darstellt.

6. Leitsystem (14) nach einem der vorangegangenen Ansprüche, das dazu ausgebildet ist, die in dem zweiten Verlaufsdiagramm (6) gemeinsam visualisierten zeitlichen Verläufe (3, 5) der Messwerte statisch darzustellen.

7. Leitsystem (14) nach Anspruch 6, das dazu ausgebildet ist, eine Anpassung einer ersten Zeitachse des ersten zeitlichen Verlaufs (3) des ersten Messwertes und einer zweiten Zeitachse des zweiten zeitlichen Verlaufs (5) des zweiten Messwertes automatisch vorzunehmen.

8. Leitsystem (14) nach Anspruch 6 oder 7, das dazu ausgebildet ist, dem Operator eine Änderungsfunktionalität bezüglich der Anpassung der ersten Zeitachse des ersten zeitlichen Verlaufs (3) des ersten Messwertes und der zweiten Zeitachse des zweiten zeitlichen Verlaufs (5) des zweiten Messwertes bereitzustellen.

9. Leitsystem (14) nach einem der vorangegangenen Ansprüche, das dazu ausgebildet ist, dem Operator eine Auswahlfunktionalität bezüglich der in dem zweiten Verlaufsdiagramm (6) gemeinsam visualisierten zeitlichen Verläufe (3, 5) der Messwerte bereitzustellen, derart, dass der Operator zwischen einer statischen und einer dynamischen visuellen Darstellung der zeitlichen Verläufe (3, 5) der Messwerte wechseln kann.

10. Leitsystem (14) nach Anspruch 8 oder 9, das dazu ausgebildet ist, die in dem zweiten Verlaufsdiagramm (6) gemeinsam visuell dargestellten zeitlichen Verläufe (3, 5) in einer gemeinsamen Datei in einem Speicher (27) abzulegen.

11. Leitsystem (14) nach einem der vorangegangenen Ansprüche, das dazu ausgebildet ist, die von dem Operator gestellte Anforderung als Nutzerselektion in einem Speicher (27) zu hinterlegen.

12. Leitsystem (14) nach einem der vorangegangenen Ansprüche, welches einen Operator Station Server (16) aufweist, der dazu ausgebildet ist, die zeitlichen Verläufe (3, 5) der Messwerte anhand von aus der technischen Anlage empfangenen Messdaten zu erzeugen und an einen mit dem Operator Station Server (16) verbundenen Operator Station Client (15) zu übertragen, welcher die visuelle Darstellung der zeitlichen Verläufe (3, 5) in den Verlaufsdiagrammen (4, 6) vornimmt.

13. Verwendung eines Leitsystems (14) gemäß einem der vorangegangenen Ansprüche zum Betrieb einer technischen Anlage, insbesondere Fertigungs- oder Prozessanlage.
